# FASCICULE DE BREVET EUROPEEN

(11) **EP 2 483 040 B1**
(45) Date de publication et mention de la délivrance du brevet: **04.06.2014**
(21) Numéro de dépôt: 10765775.1
(22) Date de dépôt: 01.10.2010
(51) Int. Cl.: B25J 13/02, B25J 3/04

(54) **STRUCTURE DE ROBOT OU D'INTERFACE HAPTIQUE A BRAS EN PARALLELE**
ROBOTERSTRUKTUR ODER HAPTISCHE SCHNITTSTELLENSTRUKTUR MIT PARALLELEN ARMEN
ROBOT OR HAPTIC INTERFACE STRUCTURE HAVING PARALLEL ARMS

(30) Priorité: 02.10.2009 FR 0956901; 13.11.2009 FR 0958006
(43) Date de publication de la demande: 08.08.2012
(73) Titulaire: Commissariat à l'Énergie Atomique et aux Énergies Alternatives, 75015 Paris (FR)
(72) Inventeur: GOSSELIN, Florian, F-92170 Vanves (FR); FERLAY, Fabien, F-26770 Taulignan (FR)
(74) Mandataire: Ilgart, Jean-Christophe
(86) Numéro de dépôt international: PCT/EP2010/064623
(87) Numéro de publication internationale: WO 2011/039341

(56) Documents cités:
- WO-A1-01/87547
- FR-A1- 2 853 272

## Description

### DOMAINE TECHNIQUE ET ART ANTÉRIEUR

La présente invention se rapporte à une structure de robot ou d'interface haptique à bras en parallèle, à un robot et à une interface haptique à six degrés de liberté comportant au moins une telle structure.

Une interface haptique permet à un individu d'interagir avec un environnement virtuel ou de commander un robot à distance, en appliquant une réaction à l'utilisateur.

Cette interface est généralement manipulée par la main.

Afin de rendre l'interface haptique la plus générique possible, on cherche à avoir six degrés de liberté, trois degrés de liberté en translation et trois degrés de liberté en rotation, afin de pouvoir manipuler l'environnement virtuel ou le robot distant dans toutes les directions.

On cherche en outre à réduire les configurations dans lesquelles des singularités pourraient apparaître, i.e. des configurations dans lesquelles il y a des disparitions locales des degrés de liberté ou apparition de mouvements incontrôlés.

Enfin, on souhaite avoir un comportement le plus homogène possible dans toutes les directions.

Il existe deux types d'architectures de robots ou d'interfaces haptiques :
- l'architecture série, constituée d'une chaîne unique articulée de plusieurs corps disposés entre une base fixe et la poignée saisie par l'utilisateur. Cette architecture permet de disposer d'un grand espace de travail, cependant elle offre une dynamique limitée car chaque corps articulé porte les corps en aval,
- l'architecture parallèle composée de plusieurs branches articulées disposées entre une base fixe et une plate forme mobile portant elle-même la poignée manipulée par l'utilisateur. Cette architecture offre une bonne dynamique mais son espace de travail est limité.

Un bon compromis est obtenu avec une architecture mixte comprenant un étage à architecture parallèle constitué de deux branches articulées formées chacune d'une épaule, d'un bras et d'un avant-bras, ces deux branches étant disposées entre une base fixe et un poignet, portant lui-même en série la poignée manipulée par l'utilisateur.

Cette architecture, comme des documents WO-A-01 87 547 et FR-A-2 853 272, offre à la fois un grand espace de travail et une bonne dynamique.

Cependant, dans les structures parallèles ou mixtes de l'état de la technique, les mouvements de rotation ne sont pas suffisamment découplés des mouvements de translation, i.e. on n'obtient pas de mouvement de rotation purs ou quasiment purs.

En outre, l'espace de travail est limité du fait des risques de collisions entre les branches.

Ces inconvénients existent également dans les structures de robot de l'état de la technique.

C'est par conséquent un but de la présente invention d'offrir une structure de robot ou d'interface haptique offrant un espace de travail important.

### EXPOSÉ DE L'INVENTION

Le but précédemment énoncé est atteint par une architecture à deux branches en parallèle montées articulées sur une base et portant un poignet, le poignet comportant un segment de liaison sur lequel est articulé un porte-poignée sur lequel est articulée une poignée, la poignée étant mobile en rotation autour de trois axes orthogonaux, dans laquelle des moyens d'amplification des mouvements de rotation de la poignée par rapport au segment de liaison sont prévus, le segment de liaison étant lui-même articulé sur les branches.

En d'autres termes, on démultiplie sélectivement la rotation de la poignée par rapport au segment de liaison, ce qui permet de réduire les risques de collisions entre les branches, et augmente l'espace de travail.

De manière avantageuse, on prévoit un dispositif de maintien en orientation du premier axe de rotation du poignet entre les branches du dispositif et le poignet, ce qui permet de rejeter les singularités en dehors de l'espace de travail.

Dans un mode de réalisation avantageux, on obtient une diminution, voire une suppression des couplages entre les mouvements de rotation et de translation.

Pour cela, l'architecture du poignet est telle qu'elle permet aux trois axes de rotation de la poignée d'être concourants.

Par exemple, le poignet comporte deux supports articulés sur les branches de la structure, ces deux éléments étant de forme courbée, dégageant ainsi la zone où se trouve le point de concours des axes de rotation, et permettant à un opérateur de manipuler la poignée au niveau du point de concours.

La présente invention a alors principalement pour objet une structure à six degrés de liberté pour robot ou interface haptique comportant une base, deux branches en parallèle et un poignet, lesdites branches étant montées articulées par une extrémité sur la base et par une autre extrémité sur le poignet, lesdites branches comportant chacune une épaule du côté de la base, un bras et un avant-bras du côté du poignet, l'avant-bras étant articulé sur le bras, ledit poignet comportant un segment de liaison sur lequel est articulé un porte-poignée autour d'un premier axe de rotation, une poignée articulée en rotation sur le porte-poignée autour d'un deuxième axe de rotation, ladite poignée étant apte à se déplacer en rotation autour du premier axe, du deuxième axe et d'un troisième axe, ladite structure comportant également des moyens de démultiplication de la rotation dudit porte-poignée autour d'au moins le premier axe de rotation par rapport à la rotation du segment de liaison.

De manière avantageuse, au moins deux des trois axes sont orthogonaux.

Le poignet comporte avantageusement deux segments, reliant le segment de liaison aux avant-bras, le segment de liaison étant articulé en rotation sur le premier et le deuxième segment, autour de deux axes, un desdits deux axes, étant parallèle au premier axe, lesdits segments étant articulés chacun en rotation sur les avant-bras, autour de deux axes, lesdits segments ayant une forme courbée sensiblement centrée sur le deuxième axe.

Selon un premier mode de réalisation, la structure comporte des segments de maintien à l'extrémité des avant-bras et le poignet comporte également deux segments, articulés en rotation sur les segments de maintien, autour de deux axes de rotation, le segment de liaison étant articulé en rotation sur le premier et le deuxième segment, autour de deux axes parallèles au premier axe, lesdits segments ayant une forme courbée sensiblement centrée sur le deuxième axe, la structure comportant également des moyens de maintien de l'orientation de chacun des axes de rotation des segments sur les segments de maintien, de telle sorte que les angles entre des axes donnés et chacun desdits axes de rotation des segments sur les segments de maintien restent constants.

Les axes de rotation des segments sur les segments de maintien sont avantageusement maintenus chacun parallèles aux dits axes donnés.

De manière encore plus avantageuse, les axes donnés sont parallèles entre eux, et les axes de rotation des segments sur les segments de maintien sont parallèles entre eux.

Lesdits moyens de maintien de l'orientation des axes de rotation sont par exemple du type à parallélogrammes déformables. Lesdits moyens de maintien de l'orientation peuvent alors comporter une bielle de maintien par bras et une bielle de maintien par avant-bras, formant chacune avec le bras ou l'avant-bras un parallélogramme déformable

Préférentiellement, le premier axe est dans le plan contenant les axes de rotation du segment de liaison sur les segments.

De manière encore plus préférentielle, le premier axe est à équidistance des axes de rotation du segment de liaison sur les segments.

Le deuxième axe est avantageusement dans le plan contenant les axes de rotation des segments sur les segments de maintien.

Le premier axe est de manière encore plus avantageuse à équidistance des axes de rotation des segments sur les segments de maintien.

De manière préférentielle, le premier axe est concourant ou sécant avec le second axe.

La position de référence de saisie et de manipulation de la poignée peut alors avantageusement être située à l'intersection du premier axe de rotation du porte-poignée et du deuxième axe de rotation de la poignée.

Dans un exemple préféré de réalisation, le premier axe est dans le plan contenant les axes de rotation du segment de liaison sur les segments et à équidistance de ces axes, le premier axe est également à équidistance des axes de rotation des segments sur les segments de maintien, le premier axe est concourant ou sécant avec le second axe, le deuxième axe est dans le plan contenant les axes de rotation des segments sur les segments de maintien, et la position de référence de saisie et de manipulation de la poignée est située à l'intersection du premier axe de rotation du porte-poignée et du deuxième axe de rotation de la poignée.

Les axes de rotation des segments sur les segments de maintien et les axes de rotation du segment de liaison sur les segments sont avantageusement concourants et orthogonaux

Selon un deuxième mode de réalisation, le segment de liaison est divisé en deux parties articulées l'une par rapport à l'autre par une liaison pivot, chaque partie étant articulée sur un segment.

Selon un premier exemple selon le deuxième mode de réalisation, la liaison pivot est perpendiculaire aux axes de rotation du segment de liaison sur les segments, et est située entre lesdits axes.

Selon un deuxième exemple selon le deuxième mode de réalisation, le segment de liaison comporte un premier élément ayant sensiblement la forme d'un L, dont une branche est articulée sur l'un des segments, autour d'un des axes de rotation du segment de liaison sur les segments, concourant avec l'un des axes de rotation des segments sur les avant-bras, et l'autre branche est sensiblement parallèle au porte-poignée, et un deuxième élément de forme coudée, ledit deuxième élément étant articulé en rotation sur le premier élément au niveau d'une première extrémité, ledit deuxième élément étant articulé en rotation sur l'autre segment, autour d'un axe concourant avec l'autre des axes de rotation des segments sur les avant-bras, les axes de rotation des segments sur les avant-bras et les axes de rotation du premier élément du segment de liaison et du deuxième élément du segment de liaison sur les segments étant concourants, et l'axe de l'articulation entre le premier élément et le deuxième élément du segment de liaison étant concourant avec l'axe de rotation d'un des segments sur les avant-bras et l'axe de rotation du premier ou deuxième élément du segment de liaison sur l'un des segments.

Avantageusement, le premier axe est concourant ou sécant avec le second axe.

Dans une variante préférée, le point de concours des premier et deuxième axes est situé à égale distance des points de concours d'une part des axes de rotation du premier élément du segment de liaison par rapport au segment et du segment par rapport à l'avant-bras, et d'autre part des axes de rotation du deuxième élément du segment de liaison par rapport au segment et du segment par rapport à l'avant-bras, et la position de référence pour la saisie et la manipulation de la poignée est placée à l'intersection du premier axe de rotation et du deuxième axe de rotation.

Quel que soit le mode de réalisation, la poignée peut être articulée sur le porte-poignée au niveau d'une de ses extrémités.

Selon le deuxième exemple selon le deuxième mode de réalisation, l'articulation du premier et du deuxième élément du segment de liaison peut être en regard de l'extrémité libre de la poignée. En variant, l'articulation du premier et du deuxième élément du segment de liaison peut être en regard de l'extrémité de la poignée articulée sur le porte-poignée.

Les moyens de démultiplication sont avantageusement formés par un cabestan à câble.

Par exemple, le cabestan à câble comporte au moins une première poulie fixée sur l'un des segments, et montée apte à pivoter sur le segment de liaison, son axe étant confondu avec l'axe de l'articulation du segment de liaison sur ledit segment, et une deuxième poulie fixée sur le porte-poignée et montée apte à pivoter sur le segment de liaison, son axe étant confondu avec le premier axe de rotation, un câble étant enroulé autour des dites poulies, le rapport de diamètre entre les deux poulies et le cheminement du câble, fixant le rapport de démultiplication desdits moyens de démultiplication

Dans une variante particulièrement adaptée au premier mode de réalisation, le cabestan comporte également deux poulies fixées chacune sur un des segments, et montées aptes à pivoter sur le segment de liaison, leur axe étant confondu avec un axe de l'articulation du segment de liaison sur ledit segment, un câble reliant chacune des dites poulies à la poulie fixée sur le porte-poignée.

Dans un autre exemple de réalisation, les moyens de démultiplication sont formés par des engrenages ou des galets frottants. Les engrenages ou les galets frottants peuvent comporter au moins un premier engrenage ou galet fixé sur l'un des segments et monté apte à pivoter sur le segment de liaison, son axe étant confondu avec l'axe de l'articulation du segment de liaison sur ledit segment et un deuxième engrenage ou galet fixé sur le porte-poignée et monté apte à pivoter sur le segment de liaison, son axe étant confondu avec le premier axe de rotation, le rapport de diamètre entre les deux engrenages ou galets fixant le rapport de démultiplication desdits moyens de démultiplication.

De manière avantageuse, le rapport de démultiplication est compris entre et 1 et 2. Le rapport de démultiplication est proche de ou égal à 1,5. De manière encore plus avantageuse, le rapport de démultiplication est égal à la racine carrée de 2 ou le rapport de démultiplication est égal à 1,4771.

Avantageusement, un moteur est monté dans le porte-poignée apte à entrainer la poignée autour du deuxième axe.

La structure selon l'invention peut comporter deux moteurs portés par la base pour agir sur les épaules autour de quatrièmes axes, deux moteurs portés par les épaules pour agir sur les bras autour de cinquièmes axes de rotation, et deux moteurs portés par les épaules pour agir sur les avant-bras autour des sixièmes axes, par l'intermédiaire de bielles d'actionnement parallèles aux bras.

Le ou les moteurs comportent avantageusement chacun un volant d'inertie à l'extrémité de leur arbre.

La présente invention a également pour objet une interface haptique comportant au moins une structure selon la présente invention

La présente invention a également pour objet un robot comportant au moins une structure selon la présente invention

### BRÈVE DESCRIPTION DES DESSINS

La présente invention sera mieux comprise à l'aide de la description qui va suivre et des dessins en annexe, sur lesquels :
- la figure 1A est une vue en perspective d'un premier mode de réalisation d'une structure selon la présente invention,
- la figure 1B est une vue identique à celle de la figure 1A dans laquelle le bras et l'avant-bras du robot sont présentés en coupe afin de voir leurs mécanismes internes,
- la figure 2A est une vue agrandie du poignet de la structure de la figure 1A,

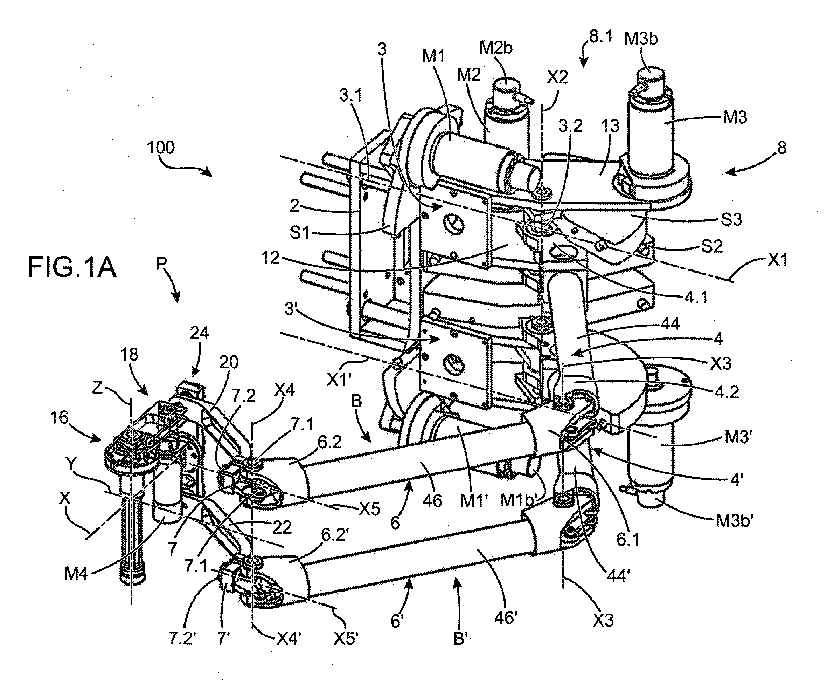

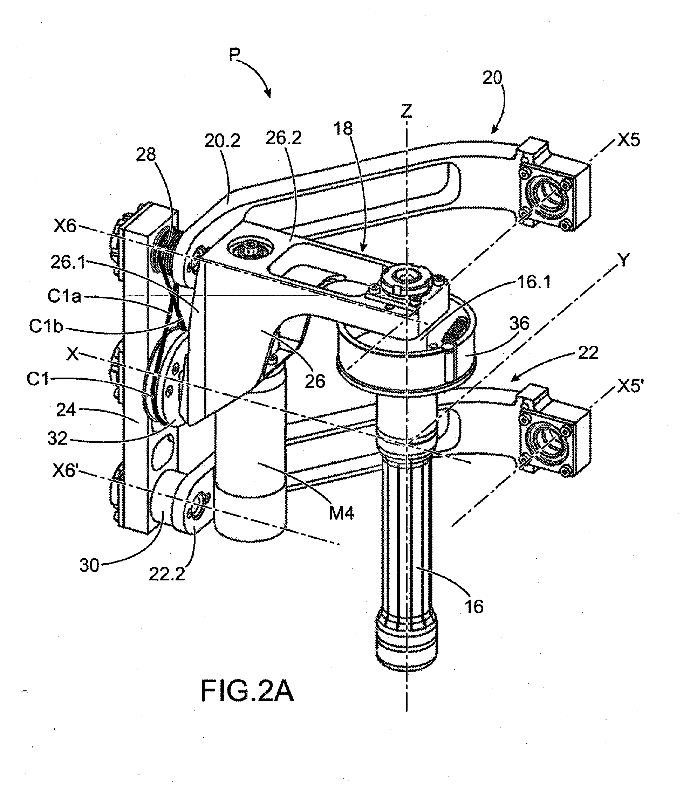

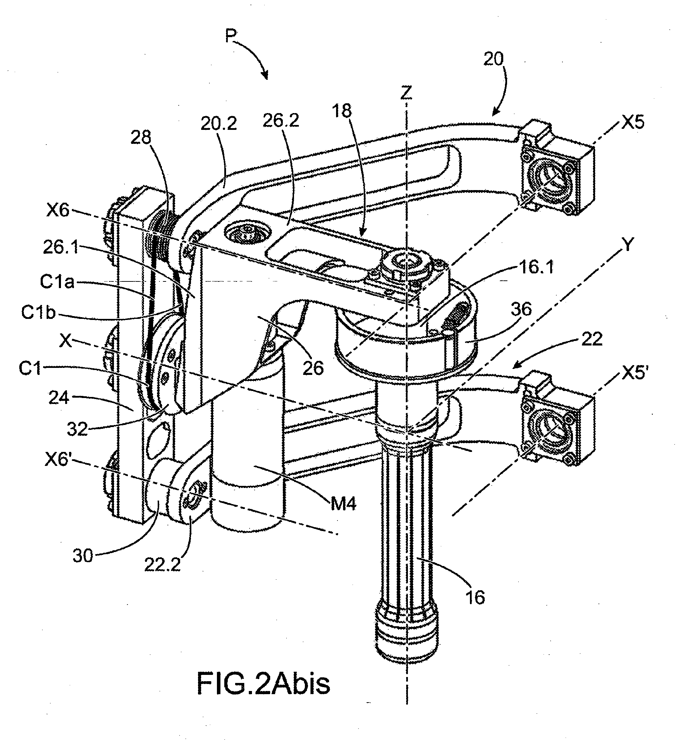

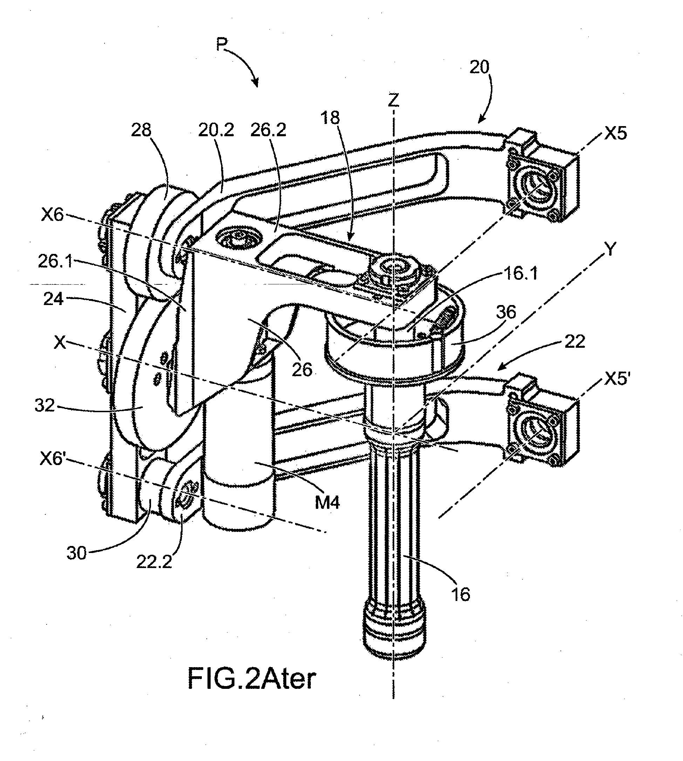

- la figure 2A bis est une vue en perspective d'une première variante du poignet de la structure de la figure 1A,
- la figure 2A ter est une vue en perspective d'une seconde variante du poignet de la structure de la figure 1A,

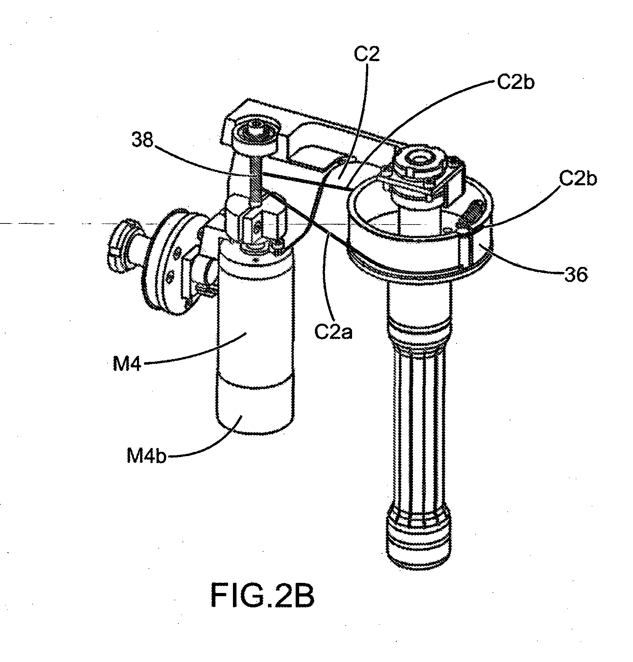

- la figure 2B est une vue agrandie du porte-poignée et de la poignée de la figure 2A, dans laquelle certaines pièces sont montrées en coupe pour voir le mécanisme d'actionnement de la poignée,

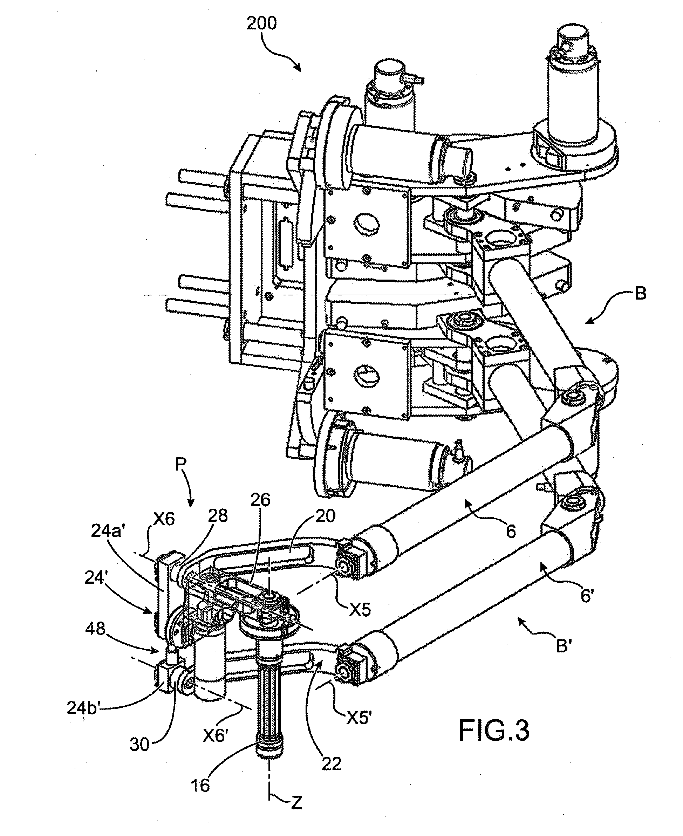

- la figure 3 est une vue en perspective d'un deuxième mode de réalisation d'une structure selon la présente invention,

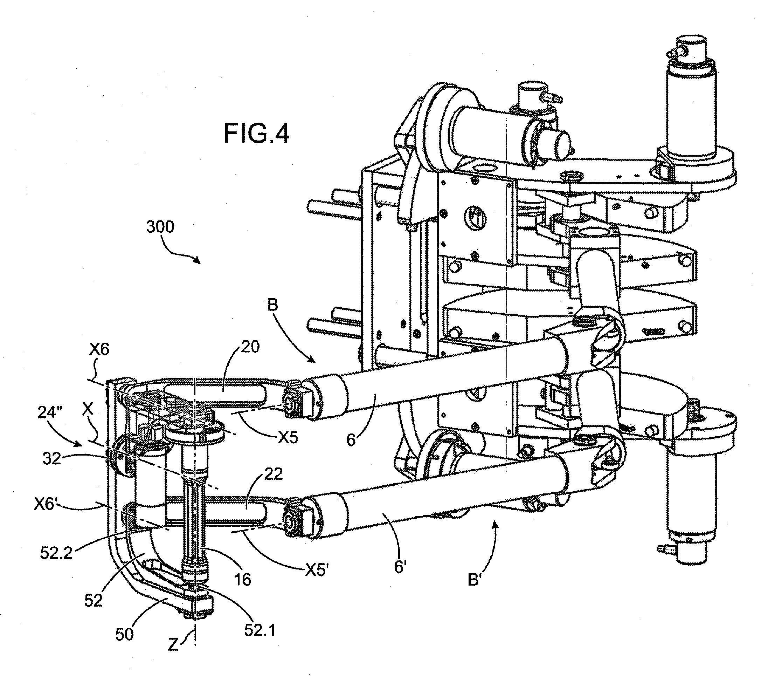

- la figure 4 est une vue en perspective d'une variante du deuxième mode de réalisation,

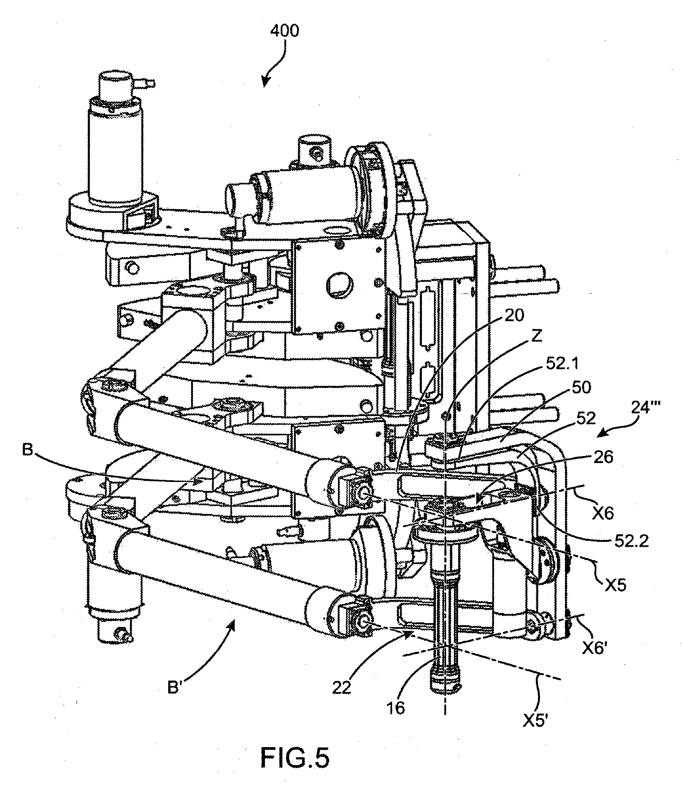

- la figure 5 est une vue en perspective d'une autre variante du deuxième mode de réalisation.

### EXPOSÉ DÉTAILLÉ DE MODES DE RÉALISATION PARTICULIERS

Dans la présente demande, des axes sont dits « concourant » lorsqu'ils sont sécants.

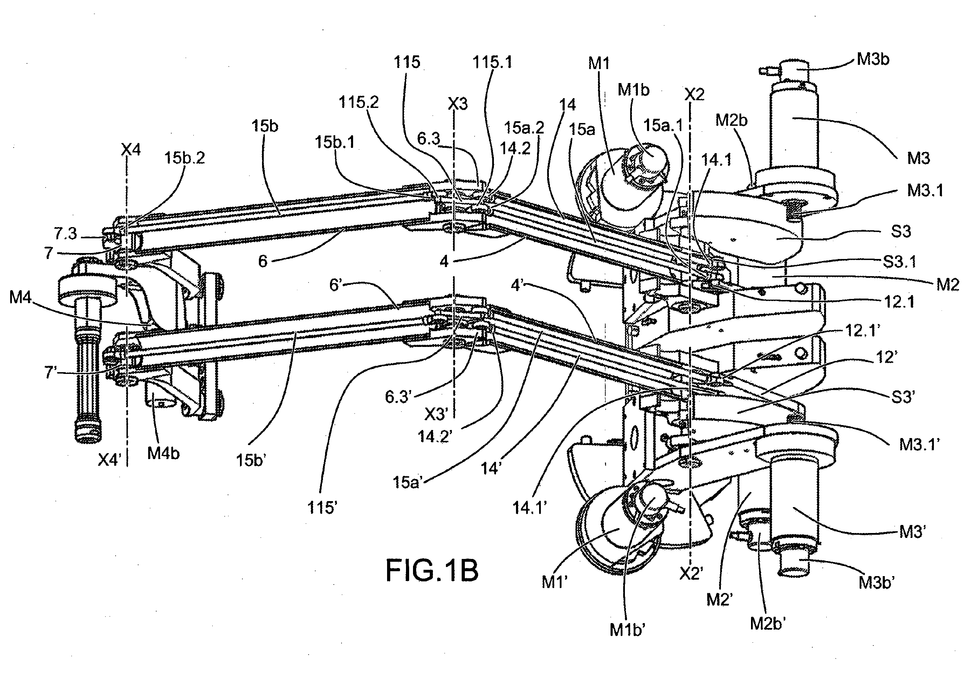

Sur les figures 1A et 1B, on peut voir un mode de réalisation préféré d'une structure 100 d'interface haptique ou de robot selon la présente invention.

La structure 100 comporte une base 2, deux branches en parallèle B, B' et un poignet P.

Dans la description qui va suivre, certains éléments seront désignés par des termes correspondant au corps humain à des fins de clarté, ces éléments jouant des fonctions sensiblement équivalentes dans le cas d'une structure de robot.

La base 2, formée par un cadre constitué de plaques rigides dans l'exemple représenté, est destinée à être fixée, par exemple à une table de travail.

Les deux branches sont sensiblement identiques ou symétriques, nous ne décrirons en détail que la branche B.

La branche B comporte une épaule 3 articulée à une première de ses extrémités 3.1 sur la base 2 autour d'un axe X1, un bras 4 articulé autour d'un axe X2 à une première de ses extrémités 4.1 sur une seconde extrémité 3.2 de l'épaule 3, un avant-bras 6 articulé autour d'un axe X3 à une première de ses extrémités 6.1 sur une deuxième extrémité 4.2 du bras 4 et un segment de maintien 7 articulé autour d'un axe X4 à une première de ses extrémités 7.1 sur une seconde extrémité 6.2 de l'avant-bras 6.

Les axes X1 et X2 sont non parallèles et avantageusement perpendiculaires. Les axes X2, X3 et X4 sont avantageusement parallèles.

Le poignet P est monté articulé sur une deuxième extrémité longitudinale 7.2 du segment de maintien 7.

La structure 100 comporte, entre la base 2 et le poignet P, des moyens d'actionnement 8 pour assurer le déplacement des branches B, B', et fournir un effort de contre-réaction dans le cas d'une interface haptique.

Ces moyens 8 sont répartis entre les articulations de la branche B et les articulations de la branche B', et sont similaires, seuls ceux 8.1 appliqués à la branche B seront décrits en détail.

Les moyens d'actionnement 8.1 comportent un premier moteur électrique M1 apte à appliquer un mouvement de rotation ou à résister au mouvement de rotation de l'épaule 3 par rapport à la base autour de l'axe X1 sensiblement horizontal dans la représentation de la figure 1A.

La transmission de la rotation de l'arbre du moteur M1 à l'épaule 3 est obtenue au moyen d'un secteur angulaire S1 entrainé suivant le principe de cabestan à câble par une poulie solidaire en rotation de l'arbre du moteur M1, le secteur angulaire S1 étant solidaire de l'épaule 3.

Ce dispositif est bien connu de l'homme de l'art et le câble n'a pas été représenté par soucis de lisibilité de la figure.

De manière avantageuse, les poulies moteurs sont spiralées pour mieux accrocher le câble et mieux le guider lors de l'actionnement du robot ou de l'interface haptique.

Cependant, il est bien entendu que ces poulies pourraient être lisses.

De même, de façon avantageuse, des moyens de rattrapage de jeu du câble, utilisant par exemple des pions de renvoi et des ressorts, peuvent être introduits sur le secteur S1, sur les autres secteurs angulaires qui seront décrits dans la suite de la description. Ce type de dispositif est connu de l'homme de l'art et ne sera pas détaillé.

Les moyens d'actionnement 8.1 comportent également un deuxième moteur M2 destiné à déplacer le bras 4 par rapport. à l'épaule 3 ou à résister à son déplacement autour de l'axe X2.

Le moteur M2 est monté sur la platine 12 faisant partie de l'épaule 3, celui-ci est donc déplacé lorsque le moteur M1 est activé.

Comme pour le moteur M1, la transmission de la rotation de l'arbre du moteur M2 au bras 4 s'effectue par l'intermédiaire d'un secteur S2 entrainé par l'arbre du moteur M2 à l'aide d'un dispositif de type cabestan à câble.

Les moyens d'actionnement 8.1 comportent encore un troisième moteur M3 destiné à déplacer l'avant-bras 6 indépendamment du bras 4 autour de l'axe X3 parallèle à l'axe X2. Comme pour les moteurs M1 et M2, le mouvement de rotation ou le couple résistant d'une poulie M3.1 (visible sur la figure 1B) liée à l'arbre du moteur M3 est transmis au secteur angulaire S3 articulé en rotation autour de l'axe X2 par rapport à l'épaule 3 par un dispositif de type cabestan à câble. Par soucis de lisibilité des figures le câble cheminant sur le secteur S3 et sur la poulie M3.1 n'est pas représenté, de même que les câbles des autres dispositifs d'actionnement liés aux autres moteurs.

Ce mouvement de rotation est transmis à l'avant-bras par l'intermédiaire d'une bielle 14 dont l'une des extrémités 14.1 est liée au secteur S3 par une articulation de rotation S3.1 et l'autre extrémité 14.2 est liée à l'avant-bras par une articulation de rotation 6.3, de telle sorte que la bielle d'actionnement 14 reste parallèle au bras 4, formant avec celui-ci un parallélogramme déformable.

Ce type de dispositif est bien connu de l'homme de l'art et ne sera pas détaillé plus avant ici.

Comme on peut le voir sur la figure 1B, dans l'exemple représenté et ceci de manière particulièrement avantageuse, la branche B comporte un ensemble de bielles 15a, 15b destinées à maintenir l'axe X5 de l'articulation de rotation entre le segment 7 et le poignet P à orientation constante par rapport à l'axe X1 de l'articulation de rotation entre la base 2 et l'épaule 3, et de manière avantageuse parallèle à cet axe.

Une première extrémité 15a.1 de la bielle 15a est articulée en rotation autour d'un axe parallèle à X2 par rapport à la platine 12 de l'épaule 3 au niveau d'une extrémité 12.1.

Une seconde extrémité 15a.2 de la bielle 15a est articulée en rotation autour d'un axe parallèle à X3 autour d'une première extrémité 115.1 d'une pièce de renvoi 115 elle-même articulée autour de l'axe X3 par rapport au bras 4 et à l'avant-bras 6. Une première extrémité 15b.1 de la bielle 15b est articulée en rotation autour d'un axe parallèle à X3 autour d'une seconde extrémité 115.2 de la pièce de renvoi 115. Une seconde extrémité 15b.2 de la bielle 15b est articulée en rotation autour d'un axe parallèle à l'axe X4 autour d'une extrémité 7.3 du segment de maintien 7.

Les axes de toutes ces articulations sont donc parallèles à l'axe X3 et les distances entre l'axe X4 et l'axe de l'articulation reliant les extrémités 7.3 du segment 7 et 15b.2 de la bielle 15b, entre l'axe X3 et l'axe de l'articulation reliant les extrémités 15b.1 de la bielle 15b et 115.2 de la pièce de renvoi 115, entre l'axe X3 et l'axe de l'articulation reliant les extrémités 15a.2 de la bielle 15a et 115.1 de la pièce de renvoi 115 et entre l'axe X2 et l'axe de l'articulation reliant les extrémités 15a.1 de la bielle 15a et 12.1 de la platine 12 sont égales, de sorte que les ensembles constitués d'une part de la platine 12, de la bielle 15a, de la pièce de renvoi 115 et du bras 4 et d'autre part de la pièce de renvoi 115, de la bielle 15b, du segment 7 et de l'avant-bras 6 constituent deux parallélogrammes en série permettant de maintenir constant l'angle entre les axes X5 et X1.

Avantageusement, les axes X1 et X5 sont maintenus parallèles.

Les moyens d'actionnement 8.2 de la branche B' sont similaires aux moyens 8.1.

Ils comportent un moteur M1' pour déplacer ou résister au déplacement de l'épaule 3' par rapport à la base 2 autour d'un axe X1', un moteur M2' pour déplacer ou résister au déplacement du bras 4' par rapport à l'épaule 3' autour d'un axe X2' et un moteur M3' pour déplacer ou résister au déplacement de l'avant-bras 6' par rapport au bras 4' autour d'un axe X3' via un dispositif de type parallélogramme constitué du bras 4', du secteur S3', de la bielle d'actionnement 14' et de la portion de l'avant-bras 6' disposée entre l'axe X3' et l'articulation 6.3'.

Les moyens de maintien de l'angle entre les axes X1' et X5' de la branche B' sont également similaires à ceux de la branche B.

Les ensembles constitués d'une part de la platine 12', de la bielle 15a', de la pièce de renvoi 115' et du bras 4' et d'autre part de la pièce de renvoi 115', de la bielle 15b', du segment 7' et de l'avant-bras 6' constituent deux parallélogrammes en série permettant de maintenir constant l'angle entre les axes X5' et X1'.

Avantageusement, les axes X1' et X5' sont maintenus parallèles.

Ainsi, les axes X1 et X1' étant avantageusement parallèles, les axes X5 et X5' le sont également.

De manière également avantageuse, on prévoit de faire passer les bielles d'actionnement 14, 14' et de maintien 15a, 15b, 15a', 15b' de l'orientation des segments 7, 7' à l'intérieur de tubes 44, 46, 44', 46' formant le corps du bras et de l'avant-bras, ce qui permet de rendre le dispositif plus sûr, puisque les risques de blessure par coincement des doigts entre les bras, avant-bras et les bielles sont réduits.

Par ailleurs, les moyens d'actionnement M1, M2, M3 de la branche B comme ceux M1', M2', M3' de la branche B' et l'actionneur M4 de la poignée, qui sera décrit ci-dessous, sont pourvus de dispositifs de mesure ou capteurs M1b, M2b, M3b, M1b', M2b', M3b', M4b destinés à mesurer leurs rotations, donc les mouvements des segments qu'ils entrainent ou auxquels ils s'opposent, de manière à apporter une réponse de commande adaptée.

Il est bien entendu que la transmission de la rotation des moteurs aux secteurs actionnant les branches peut être réalisée par tout autre moyen adapté, comme par exemple des systèmes d'engrenages, de courroies ou de galets frottants.

Il est également entendu que l'actionnement peut être obtenu par tout type de moteurs adapté, comme par exemple des moteurs électriques à courant continu, des moteurs synchrones autopilotés, des moteurs asynchrones ou encore des actionneurs pneumatiques ou hydrauliques.

On peut encore utiliser pour opposer une résistance aux mouvements de l'utilisateur des systèmes freinant, comme par exemple des freins à poudre, des freins à fluides électro ou magnéto rhéologiques ou des freins à disques.

Des moteurs peuvent également être combinés aux freins sur les différents axes du robot. Ce type d'association est connu de l'homme de l'art et ne sera pas-détaillé ici.

Il est enfin entendu que les dispositifs de mesure des mouvements des moteurs peuvent être de tout type adapté, comme par exemple des codeurs optiques, des potentiomètres, des capteurs à effet Hall, des capteurs magnéto-optiques.

Des dispositifs de mesure de l'un quelconque de ces types pourraient également être intégrés directement au niveau des articulations le long des axes X1, X1' entre la base 2 et les épaules 3, 3', le long des axes X2, X2' entre les épaules 3, 3' et les bras 4, 4', le long des axes X3, X3' entre les bras 4, 4' et les avant-bras 6, 6', ces dispositifs de mesure venant en remplacement ou en complément de ceux des moteurs M1, M2, M3, M1', M2', M3'.

De manière avantageuse, des volants d'inertie sont prévus sur les arbres des moteurs pour améliorer la stabilité de leur contrôle commande, et donc améliorer les performances en effort du robot ou de l'interface haptique.

Nous allons maintenant décrire en détail le poignet P selon la présente invention.

Le poignet P est monté articulé sur les extrémités 7.2 et 7.2' des segments de maintien 7 et 7'.

Plus particulièrement, le poignet P est monté mobile en rotation sur les extrémités 7.2 et 7.2' autour d'un axe X5, X5' respectivement, non parallèle et avantageusement perpendiculaire à l'axe X4, respectivement X4'.

Le poignet P comporte une poignée 16 destinée à être saisie par l'opérateur, dans le cas d'une interface haptique, un porte-poignée 18 sur lequel est montée la poignée 16, un segment de liaison 24 sur lequel est monté le porte-poignée 18 et deux segments 20, 22 pour relier le segment de liaison 24 aux segments de maintien 7, 7'.

Dans le cas d'un robot, on désignera également par poignée la partie destinée à interagir avec l'extérieur, par exemple un moyen de préhension, tel qu'une pince ou une ventouse.

La poignée peut être un stylo, un manche à balai, par exemple du type joystick, une boule, une pince, etc. selon les applications envisagées, dont on peut citer les jeux, les dispositifs de simulation, notamment d'assemblage, de maintenance ou de formation au geste technique ou au poste de travail, la télémanipulation, la télé-opération ou le déplacement à distance, par exemple dans le domaine nucléaire, le domaine de l'aérospatial ou le domaine médical.

La poignée 16 est mobile en rotation autour de trois axes X, Y et Z.

Dans l'exemple représenté, l'axe Z est confondu avec l'axe de la poignée, celui-ci est vertical dans la représentation de la figure 2A.

Les axes X et Y sont contenus dans un plan avantageusement orthogonal à l'axe Z, situé entre les deux segments de maintien 7, 7' entre les deux branches.

L'axe X est situé dans la zone médiane entre les deux axes de rotation X6, X6' autour desquels le segment de liaison 24 est articulé sur les segments 20, 22.

L'axe Y est situé dans la zone médiane entre les deux axes X5, X5', autour desquels chaque segment 20, 22 est articulé sur les segments de maintien 7, 7'.

Sur la figures 2A et 2B, on peut voir en détail le poignet de la figure 1. Les figures 2A bis et 2A ter représentent des variantes de réalisation du poignet.

Sur la figure 2A, le segment de maintien 24 a une forme de plaque reliant les deux extrémités 20.2, 22.2 des segments 20, 22, opposées à celles reliées aux segments de maintien 7, 7' et le porte-poignée a une forme de L monté en porte-à-faux sur le segment de liaison 24 et à l'extrémité duquel la poignée est montée.

Dans le mode de réalisation représenté sur la figure 2A, la pièce en L 26 comporte une branche sensiblement orthogonale à l'axe Z et la poignée est reliée à la deuxième branche de la pièce en L par une de ses extrémités longitudinales 16.1.

Le segment de liaison 24 est monté articulé autour des deux axes de rotation X6, X6' par deux liaisons pivots sur les extrémités 20.2, 22.2 des segments 20, 22.

La pièce en L 26 comporte une petite branche 26.1 articulée en rotation autour de l'axe X sur le segment de liaison entre les deux liaisons pivots d'axes X6 et X6', avantageusement à mi-distance de ces axes.

De manière avantageuse, la poignée 16 est montée à l'extrémité libre de la grande branche 26.2 de la pièce en L, ce qui permet à l'opérateur de saisir aisément la poignée à pleine main ou avec les doigts.

Il est bien entendu que l'on pourrait prévoir que l'ensemble poignée et porte-poignée forme une pièce en T couchée, le pied du T étant perpendiculaire au segment de liaison 24 et articulé en rotation sur le segment de liaison 24.

Selon la présente invention, on introduit un rapport de démultiplication entre la rotation de l'ensemble porte-poignée 18 et poignée 16 autour de l'axe X et le mouvement de rotation du segment de liaison 24 par rapport aux segments 20, 22 autour des axes X6, X6', de sorte que la rotation de la poignée autour de l'axe X soit amplifiée par rapport à celle du segment de liaison 24 reliant les segments 20, 22.

Cette démultiplication dans les mouvements de rotation permet de limiter les rapprochements des extrémités des deux branches B, B', tout en offrant un pivotement de grande amplitude de la poignée, plus particulièrement autour de l'axe X.

Les risques de collisions sont donc diminués et l'espace de travail est augmenté, puisque l'amplitude des mouvements de rotation est augmentée.

En outre, les performances en rotation d'un point de vue vitesses, efforts et raideurs de contrôle sont améliorées et homogénéisées.

Dans l'exemple représenté, la démultiplication est obtenue par un système de type cabestan à câble.

Le système de démultiplication comporte une première poulie 28 fixée sur le segment 20 à son extrémité 20.2. Le segment de liaison 24 étant mobile en rotation autour de l'axe X6, il tourne par rapport à la poulie 28. Une seconde poulie 32 est fixée sur la pièce en L 26 du porte-poignée 18 et tourne autour de l'axe X par rapport au segment de liaison 24 en même temps que la pièce en L 26. Un câble C1 relie les poulies 28 et 32. Une première portion de câble libre C1a est fixé à l'une de ses extrémités sur la poulie 32 tandis que son autre extrémité atteint la poulie 28. Le câble est ensuite enroulé plusieurs fois sur la poulie 28 afin d'empêcher tout glissement entre la poulie et le câble. Cet enroulement n'est pas représenté sur les figures par soucis de lisibilité. La poulie 28 est avantageusement spiralée pour améliorer l'accroche du câble. Dans cet exemple de réalisation, les portions de câble C1a et C1b sont croisés.

Enfin, une seconde portion de câble libre C1b va de la poulie 28 à l'une de ses extrémités à la poulie 32 à laquelle elle est attachée à son autre extrémité. Ainsi tout mouvement du câble par rapport à l'une des poulies se traduit par une rotation de l'autre poulie.

Comme les poulies des moteurs M1, M2, M3, M1', M2', M3', il est bien entendu que la poulie 28, tout comme la poulie 38 présentée ci-dessous pourraient être lisses. De même, comme sur les secteurs S1, S2, S3, S1', S2', S3', des moyens de rattrapage de jeu du câble, utilisant par exemple des pions de renvoi et des ressorts, peuvent être introduits de façon avantageuse sur la poulie 32 et sur la poulie 36 qui sera présentée par la suite. Ce type de dispositif est connu de l'homme de l'art et ne sera pas détaillé.

Le rapport des mouvements des deux poulies est fonction du rapport entre leurs diamètres. Ici lorsque le segment de liaison subit un mouvement de rotation par rapport aux segments 20, 22 autour des axes X6, X6', l'un des brins de câble vient s'enrouler autour de la poulie 28 tandis que l'autre s'en déroule.

Le câble entraine alors la poulie 32 donc le porte-poignée 18 autour de l'axe X. De la même manière, lorsque l'utilisateur entraine la poignée autour de l'axe X, la poulie 32 est entrainée en rotation par rapport au segment de liaison 24. Ce mouvement est transmis par le câble C1 à la poulie 28 et le segment de liaison 24 est mû en rotation par rapport aux segments 20, 22 autour des axes X6, X6'.

Une pièce 30 est fixée sur le segment 22 à son extrémité 22.2. Dans le mode de réalisation présenté sur la figure 2A, cette pièce sert uniquement à combler le décalage entre le segment de liaison 24 et le segment 22 provoqué par l'introduction de la poulie 28 entre le segment de liaison 24 et le segment 20.

Il serait également possible de placer le câble C1 entre la poulie 32 et la pièce 30.

Dans ce cas on pourrait avantageusement réaliser un filetage sur la pièce 30 de manière à améliorer l'accroche du câble sur celle-ci.

Il serait également possible de mettre un des brins du câble C1 entre la poulie 28 et la poulie 32 et l'autre brin entre la poulie 32 et la pièce 30 de manière à équilibrer le système.

Il serait enfin possible de mettre un câble entre la poulie 28 et la poulie 32 et un second câble entre la poulie 32 et la pièce 30 de manière à renforcer le dispositif et à en améliorer les capacités et la raideur en doublant le câble.

Le rapport de démultiplication est choisi de manière avantageuse de sorte que le mouvement de la poignée soit plus important que celui du segment de liaison 24 afin de limiter les collisions entre les branches B, B' et de telle sorte que la raideur d'asservissement en rotation soit la plus homogène dans toutes les directions et dans toutes les orientations de l'espace de travail.

Le rapport d'amplification, c'est-à-dire le rapport entre l'angle de rotation du porte-poignée 18 et de la poignée 16 autour de l'axe X et l'angle de rotation du segment de liaison 24 autour des axes X6, X6', est compris de préférence entre 1 et 2.

Ces valeurs de rapport d'amplification permettent d'obtenir une raideur d'asservissement en rotation homogène à la fois dans toutes les directions et dans toutes les orientations de l'espace de travail.

De manière encore plus préférentielle, ce rapport est proche de ou égal à 1,5. Il peut ainsi être pris égal de manière préférentielle à √2 ou à 1.4771.

Le rapport d'amplification est également fonction du cheminement du câble. La figure 2A bis montre ainsi une variante du dispositif dans laquelle les deux brins de câble C1a et C1b ne se croisent pas. On obtient ainsi un rapport d'amplification différent.

La démultiplication peut également être réalisée par un système à courroie ou à engrenages. La figure 2A ter montre une variante du dispositif d'amplification utilisant des engrenages ou des galets frottants. Un premier engrenage ou galet 28 est fixé à l'extrémité 20.2 du segment 20 dont il est solidaire. Un second engrenage ou galet 32 est fixé à la branche 26.1 du porte poignée 26 dont il est solidaire. Le segment de liaison 24 tourne par rapport à l'engrenage 28 et au segment 20 autour de l'axe X6 et par rapport à l'engrenage 32 et au porte poignée 26 autour de l'axe X. L'engrènement des dents des engrenages 28 et 32 (non représentées sur la figure 2A ter par soucis de lisibilité) ou l'entrainement par frottement des galets 28 et 32 produit le mouvement d'amplification.

Suivant le type de mécanisme choisi, le rapport des rayons des poulies ou des engrenages ou galets et le cheminement des câbles ou le nombre d'engrenages, on obtient des rapports d'amplification différents inférieurs ou supérieurs à 1.

Dans l'exemple représenté, la démultiplication de la rotation est réalisée autour de l'axe X. On peut prévoir de réaliser une démultiplication autour de l'axe. Y, s'ajoutant à celle autour de l'axe X ou à la place de celle autour de l'axe X.

Par exemple, la démultiplication de la rotation autour de l'axe Y peut être obtenue en disposant le segment de liaison 24 en rotation autour des axes X5, X5' entre les segments de maintien 7 et 7', et en montant un segment similaire au segment 20 au centre du segment de liaison 24, le segment 20 pouvant alors tourner autour de l'axe Y par rapport au segment de liaison 24.

Le porte-poignée 18 serait alors monté à l'extrémité libre 20.2 du segment 20, le segment 22 n'existant plus dans ce cas. Une poulie similaire à la poulie 28 serait fixée sur le segment de maintien 7 et une poulie similaire à la poulie 32 serait fixée sur le segment 20. Un câble similaire au câble C1 serait disposé entre la poulie similaire à la poulie 28 et la poulie similaire à la poulie 32 et assurerait que le mouvement de rotation du segment 20 autour de l'axe Y soit amplifié par rapport au mouvement de rotation du segment de liaison 24 autour des axes X5, X5'. Un moteur serait monté à proximité de ou à l'extrémité 20.2 du segment 20 et entrainerait directement la poulie 32 donc le porte-poignée 18 et la poignée 16 autour de l'axe X, qui serait alors confondu avec l'axe X6. Cet entrainement pourrait être réalisé par tout moyen approprié comme par exemple un cabestan à câble, des engrenages, une courroie ou des galets frottants.

De même, le mouvement d'amplification autour de l'axe Y pourrait être réalisé par tout autre moyen approprié, comme par exemple des engrenages, une courroie ou des galets frottants.

Avantageusement, on prévoit de commander le mouvement de la poignée 16 autour de l'axe Z au moyen d'un moteur M4 embarqué sur le porte-poignée 18.

Dans l'exemple représenté, le moteur M4 est logé dans la pièce en L 26 le long de la petite branche 26.1.

La rotation du moteur M4 est transmise à la poignée 16 par un câble C2 (représenté sur la figure 2B sur laquelle la pièce en L 26 est vue en coupe pour permettre de le voir) et une poulie 36 solidaire en rotation de la poignée 16.

Le câble C2 comprend une première portion libre C2A fixée à la poulie 36 à l'une de ses extrémités et allant jusqu'à une poulie 38 solidaire de l'arbre de sortie du moteur M4 à son autre extrémité. Le câble C2 fait ensuite plusieurs tours autour de la poulie 38 de manière à empêcher tout glissement entre le câble et la poulie. Enfin, une seconde portion de câble libre C2b va de la poulie 38 à l'une de ses extrémités à la poulie 36 à laquelle il est fixé à son autre extrémité.

Ainsi tout mouvement du moteur est transmis à la poignée et tout mouvement de la poignée est transmis au moteur.

Ces mouvements sont amplifiés d'un rapport égal au rapport entre les diamètres des poulies 36 et 38.

Ce dispositif de type cabestan à câbles est connu de l'homme de l'art et ne sera pas plus détaillé ici.

On peut prévoir de disposer le moteur M4 à distance du poignet, dans ce cas la masse embarquée est réduite mais il faudra prévoir des systèmes de transmissions pour actionner la poignée à distance.

De manière particulièrement avantageuse, l'axe X est situé dans le plan contenant les axes X6 et X6'. De manière plus avantageuse, l'axe X est équidistant des axes X6 et X6'. De manière encore plus avantageuse, l'axe Z et l'axe X sont concourants. Le découplage en X est amélioré.

De manière avantageuse également, l'axe Z est situé dans le plan contenant les axes X5 et X5'. De manière encore plus avantageuse l'axe X est équidistant des axes X5 et X5'. Le découplage en Y est amélioré.

Si en outre, et de la manière la plus avantageuse, la zone de saisie de la poignée est située au point de concours des axes X et Z, à équidistance à la fois des axes X5 et X5' et des axes X6 et X6', alors on obtient un très bon découplage entre les mouvements de rotation et de translation, ce qui permet d'obtenir des mouvements de rotation ou de translation quasiment purs.

De manière avantageuse, on peut aussi faire en sorte que les axes X5 et X6 soient respectivement concourants et orthogonaux, de même pour les axes X5' et X6'. Il en résulte que les axes X5, X6 et Z d'une part et X5', X6' et Z d'autre part sont concourants lorsque la poignée est dans sa configuration de référence correspondant à la verticale sur la figure 2A.

De manière avantageuse également, les axes X et Z sont perpendiculaires.

Cette disposition permet de simplifier les modèles du robot, en particulier les modèles géométriques, cinématiques, statiques et dynamiques directs et inverses, qui sont donc plus faciles et plus rapides à calculer. La fréquence des calculs étant plus élevée, le fonctionnement du contrôleur gérant les moteurs est amélioré ainsi que les performances du robot ou de l'interface haptique. En outre cela simplifie les mouvements internes à la structure, ce qui perturbe moins l'utilisateur.

Dans l'exemple représenté sur les figures 1A et 1B, les axes sont rendus concourants grâce à la forme particulière des segments 20, 22 reliant le segment de liaison 24 aux extrémités 7.2, 7.2' des segments de maintien 7, 7'.

Ainsi les segments 20, 22 sont courbés à 90°, ce qui permet d'assurer, de manière simple, que les axes X5 et X6, respectivement X5' et X6', sont concourants et perpendiculaires.

La courbure des segments 20, 22 permet en outre de dégager la zone située à l'extrémité des segments de maintien 7, 7' où se situe le point de concours des axes X, Y, Z, ce qui permet d'y loger la poignée 16 et la main de l'utilisateur.

Sur la figure 3, on peut voir un mode de réalisation d'une structure 200 selon la présente invention dans lequel les orientations des axes X5, X5' ne sont pas maintenues constantes.

Le dispositif de la figure 3 ne comporte donc pas de moyens de maintien de type parallélogramme déformable. Par contre, l'actionnement des avant-bras 6, 6' par les moteurs M3, M3' est toujours obtenu par des parallélogrammes d'actionnement comme dans le cas de la structure 100 et suivant le même principe que sur celle-ci qui ne sera pas détaillé ici. La structure des branches est donc simplifiée.

Un degré de liberté en rotation est ajouté au niveau du segment de liaison 24 afin de permettre le changement d'orientation relative des axes X5 et X5', respectivement X6 et X6'.

Dans ce cas, les axes de rotation X, Y, Z de la poignée 16 ne respectent plus nécessairement les conditions de concours avec les axes X5, X5' et X6, X6' et/ou de distances à ceux-ci énoncées précédemment dès lors que la poignée est déplacée en translation ou en rotation.

Sur la figure 3, on peut voir un exemple de réalisation pour créer ce degré de liberté.

Une liaison pivot 48 est donc réalisée entre deux portions 24a' et 24b' du segment de liaison 24' situé entre les liaisons pivot d'axes X6, X6'.

Dans ce cas, le mécanisme d'amplification de la rotation de l'ensemble porte-poignée 18 et poignée 16 par rapport à la rotation du segment de liaison 24' est réalisé d'un seul côté du segment de liaison 24', par exemple 24a' sur la figure 3. Les collisions entre les branches B, B' sont toujours limitées et les singularités sont rejetées pour des valeurs d'orientation plus importantes.

Sur la figure 4, on peut voir une variante de réalisation avantageuse d'une structure 300 selon le deuxième mode de réalisation, dans laquelle le segment de liaison 24" se prolonge par une portion courbée 50 sous la poignée 16, et dans laquelle un segment 52 de forme courbée correspondante à celle de la portion 50 est superposé sur la portion de segment 50. Le segment 52 est monté articulé en rotation à une première de ses extrémités 52.1 sur la portion de segment 50, l'axe de rotation étant confondu avec l'axe Z dans la configuration de référence ou la poignée est représentée verticale, et à l'autre de ses extrémités 52.2 sur le segment 22 autour de l'axe X6'. Le segment 22 est monté articulé en rotation par rapport à l'avant-bras de la branche B' autour de l'axe X5'. De manière avantageuse, l'axe X6' de l'articulation de rotation entre le segment 52 et le segment 22 est concourant avec l'axe X5' et l'axe de l'articulation entre la portion de segment 50 et le segment 52. De manière plus avantageuse encore, les axes X5' et X6' sont perpendiculaires, de même que l'axe X6' et l'axe de l'articulation entre la portion de segment 50 et le segment 52.

Sur la figure 4, on peut également voir que le segment de liaison 24" est articulé en rotation sur le segment 20 autour de l'axe X6, le segment 20 étant lui-même articulé en rotation sur l'avant-bras de la branche B autour de l'axe X5. De manière avantageuse, les axes X5 et X6 sont concourants et de manière plus avantageuse encore perpendiculaires.

Ainsi le segment de liaison 24" est relié à l'avant-bras 6 par une liaison cardan d'axes X5 et X6 concourants et avantageusement perpendiculaires, et il est relié à l'avant-bras 6' par une liaison rotule dont les axes X5', X6' et l'axe de liaison entre la portion 50 et le segment 52 sont concourants.

Si l'axe X de rotation de la poulie 32 par rapport au segment de liaison 24" est concourant avec l'axe Z de la poignée et que le point de concours de ces axes est situé à égale distance des points de concours des axes X5, X6 et X5', X6' et que la position de référence pour la saisie et la manipulation de la poignée est placée à l'intersection de l'axe X et de l'axe Z, on retrouve un découplage entre les mouvements de translation et ceux de rotation.

Sur la figure 5, on peut voir une variante d'une structure 400 selon le deuxième mode de réalisation proche de celle de la figure 4, dans laquelle l'extrémité libre de la poignée 16 est complètement dégagée, ce qui peut être avantageux dans certaines applications.

L'axe X6' de rotation du segment de liaison 24''' par rapport au segment 22 est toujours concourant avec l'axe X5' de rotation du segment 22 par rapport à l'avant-bras 6' de la branche B' et de manière avantageuse perpendiculaire à ce dernier.

Dans cette variante, le segment 52 est articulé sur le segment 20. L'axe X6 de rotation du segment 52 par rapport au segment 20 est concourant avec l'axe X5 de rotation du segment 20 par rapport à l'avant-bras 6 de la branche B, et de manière avantageuse perpendiculaire à ce dernier, et ces deux axes sont concourants avec l'axe de l'articulation entre la portion 50 et le segment 52. De manière avantageuse encore, l'axe X6 est perpendiculaire à l'axe de l'articulation entre la portion de segment 50 et le segment 52.

Le segment 50 et le segment 52 sont alors disposés au dessus de la pièce en L 26, rendant l'espace autour de l'extrémité libre de la poignée 16 largement accessible.

Des dispositifs de mesure décrits précédemment pourraient également être intégrés directement au niveau de l'articulation le long de l'axe Z entre le porte-poignée 18 et la poignée 16, ces dispositifs de mesure venant en remplacement ou en complément de ceux du moteur M4.

Des dispositifs de mesure redondants pourraient également être disposés le long des axes X4, X4' entre les avant-bras 6, 6' et les segments de maintien 7, 7', le long des axes X5, X5' entre les segments de maintien 7, 7' et les segments 20, 22, respectivement entre les avant-bras 6, 6' et les segment 20, 22, le long des axes X6, X6' entre les segments 20, 22 et le segment de liaison 24 ou ses portions 24a', 24b', 24", 52, 24"', 52, le long de l'axe de l'articulation entre les segments 50 et 52 et le long de l'axe X entre le segment de maintien 24, 24', 24", 24"' et le porte-poignée 18, que ce soit le long de tous les axes énoncés ci-dessus ou uniquement le long de certain d'entre eux.

Dans le cas d'une interface haptique, les moteurs sont pilotés pour offrir un retour d'effort en fonction des interactions dans la simulation en réalité virtuelle ou en fonction des interactions entre le robot distant et son environnement. Dans le cas d'un robot les moteurs sont pilotés pour effectuer les mouvements ou appliquer les efforts programmés par l'utilisateur et - ou fonction des mesures des capteurs du robot ou de capteurs externes.

Il est bien entendu que l'orientation des axes de rotation telle que représentée sur les figures n'est en aucun cas limitative, les axes représentés verticalement pourraient être horizontaux suivant la disposition de la structure, ou inclinés d'un certain angle. Cette remarque s'applique aussi à la configuration de référence de la poignée représentée dans une position verticale sur les figures.

Grâce à la structure selon la présente invention, on obtient de manière simple une interface haptique ou un robot à deux branches en parallèle dont les performances sont améliorées, en repoussant les singularités aux limites des déplacements de la poignée et en augmentant l'espace de travail grâce à une limitation des collisions entre les branches du robot.

En outre, le choix adéquat du rapport de démultiplication permet d'améliorer les performances en efforts et en raideur de contrôle.

Dans tous les modes de réalisation, le dispositif d'amplification peut être à poulies et à câble croisé ou non, à engrenages ou à courroie ou de tout autre type adapté.

Dans une réalisation particulièrement avantageuse, la structure selon la présente invention permet le découplage entre les mouvements de rotation et de translation.

## Revendications

1. Structure à six degrés de liberté pour robot ou interface haptique comportant une base (2), deux branches en parallèle (B, B') et un poignet (P), lesdites branches (B, B') étant montées articulées par une extrémité sur la base (2) et par une autre extrémité sur le poignet (P), lesdites branches (B, B') comportant chacune une épaule (3, 3') du côté de la base (2), un bras (4, 4') et un avant-bras (6, 6') du côté du poignet (P), l'avant-bras (6, 6') étant articulée sur le bras (4, 4'), ledit poignet (P) comportant un segment de liaison (24) articulé en rotation sur lesdites branches (B, B') sur lequel est articulé un porte-poignée (18) autour d'un premier axe de rotation (X), une poignée (16) articulée en rotation sur le porte-poignée (18) autour d'un deuxième axe de rotation (Z), ladite poignée (16) étant apte à se déplacer en rotation autour du premier axe (X), du deuxième axe (Z) et d'un troisième axe (Y), ladite structure comportant également des moyens de démultiplication de la rotation dudit porte-poignée (18) autour d'au moins le premier axe de rotation (X) par rapport à la rotation du segment de liaison (24).

2. Structure selon la revendication 1, dans laquelle le poignet (P) comporte également deux segments (20, 22) reliant le segment de liaison (24) aux avant-bras (6, 6'), le segment de liaison (24) étant articulé en rotation sur le premier et le deuxième segment (20, 22) autour de deux axes (X6, X6'), un desdits deux axes (X6, X6') étant parallèle au premier axe (X), lesdits, segments (20, 22) étant articulés chacun en rotation sur les avant-bras (6, 6') autour de deux axes (X5, X5'), lesdits segments (20, 22) ayant une forme courbée sensiblement centrée sur le deuxième axe (Z).

3. Structure selon la revendication 1, comportant des segments de maintien (7, 7') à l'extrémité des avant-bras (6, 6') et dans laquelle le poignet (P) comporte également deux segments (20, 22) articulés en rotation sur les segments de maintien (7, 7') autour de deux axes de rotation (X5, X5'), le segment de liaison (24) étant articulé en rotation sur le premier et le deuxième segment (20, 22) autour de deux axes (X6, X6') parallèles au premier axe (X), lesdits segments (20, 22) ayant une forme courbée sensiblement centrée sur le deuxième axe (Z), la structure comportant également des moyens de maintien de l'orientation de chacun des axes de rotation (X5, X5') des segments (20, 22) sur les segments de maintien (7, 7'), de telle sorte que les angles entre des axes donnés (X1, X1') et chacun desdits axes de rotation (X5, X5') des segments (20, 22) sur les segments de maintien (7, 7') restent constants.

4. Structure selon la revendication 3, dans laquelle les axes de rotation (X5, X5') des segments (20, 22) sur les segments de maintien (7,7') sont maintenus chacun parallèles aux dits axes donnés (X1, X1') et dans laquelle les axes donnés (X1, X1') sont parallèles entre eux.

5. Structure selon la revendication 3 ou 4, dans laquelle lesdits moyens de maintien de l'orientation comportent une bielle de maintien (15a, 15a') par bras (4, 4') et une bielle de maintien (15b, 15b') par avant-bras (6, 6'), formant chacune avec le bras (4, 4') ou l'avant-bras (6, 6') un parallélogramme déformable.

6. Structure suivant l'une quelconque des revendications 3 à 5, dans laquelle le premier axe (X) est dans le plan contenant les axes de rotation (X6, X6') du segment de liaison (24) sur les segments (20, 22) et dans laquelle ce premier axe (X) est à équidistance des axes de rotation (X6, X6') du segment de liaison (24) sur les segments (20, 22).

7. Structure suivant l'une quelconque des revendications 3 à 5, dans laquelle le deuxième axe (Z) est dans le plan contenant les axes de rotation (X5, X5') des segments (20, 22) sur les segments de maintien (7, 7') et dans laquelle le premier axe (X) est à équidistance des axes de rotation (X5, X5') des segments (20, 22) sur les segments de maintien (7, 7').

8. Structure suivant l'une quelconque des revendications précédentes, dans laquelle au moins deux des axes parmi (X), (Y) et (Z) sont orthogonaux dans laquelle le premier axe (X) est concourant ou sécant avec le second axe (Z) et dans laquelle la position de référence de saisie et de manipulation de la poignée est située à l'intersection du premier axe (X) de rotation du porte-poignée (18) et du deuxième axe (Z) de rotation de la poignée (16).

9. Structure suivant l'une quelconque des revendications 3 à 5, dans laquelle le premier axe (X) est dans le plan contenant les axes de rotation (X6, X6') du segment de liaison (24) sur les segments (20, 22) et à équidistance de ces axes (X6, X6'), le premier axe (X) est également à équidistance des axes de rotation (X5, X5') des segments (20, 22) sur les segments de maintien (7, 7'), le premier axe (X) est concourant ou sécant avec le second axe (Z), le deuxième axe (Z) est dans le plan contenant les axes de rotation (X5, X5') des segments (20, 22) sur les segments de maintien (7, 7'), dans laquelle la position de référence de saisie et de manipulation de la poignée est située à l'intersection du premier axe (X) de rotation du porte-poignée (18) et du deuxième axe (Z) de rotation de la poignée (16) et dans laquelle les axes de rotation (X5, X5') des segments (20, 22) sur les segments de maintien (7, 7') et les axes de rotation (X6, X6') du segment de liaison (24) sur les segments (20, 22) sont concourants et orthogonaux.

10. Structure selon l'une des revendications 1 ou 2, dans laquelle le segment de liaison (24', 24", 24"') est en deux parties articulées l'une par rapport à l'autre par une liaison pivot, chaque partie étant articulée sur un segment (20, 22).

11. Structure selon la revendication 10, dans laquelle le segment de liaison (24", 24"') comporte un premier élément (50) ayant sensiblement la forme d'un L, dont une branche est articulée sur l'un des segments (20, 22) autour d'un des axes de rotation (X6, X6') du segment de liaison (24", 24"') sur les segments (20, 22) concourant avec l'un des axes de rotation (X5, X5') des segments (20, 22) sur les avant-bras (6, 6') et l'autre branche est sensiblement parallèle au porte-poignée (18), et un deuxième élément (52) de forme coudée, ledit deuxième élément (52) étant articulé en rotation sur le premier élément (50) au niveau d'une première extrémité (52.1), ledit deuxième élément (52) étant articulé en rotation sur l'autre segment (22, 20) autour d'un axe concourant avec l'autre des axes de rotation (X5', X5) des segments (22, 20) sur les avant-bras (6', 6), les axes de rotation (X5, X5') des segments (20, 22) sur les avant-bras (6, 6') et les axes de rotation (X6, X6') du premier élément (50) et du deuxième élément (52) du segment de liaison (24", 24"') sur les segments (20, 22) étant concourants et l'axe de l'articulation entre le premier élément (50) et le deuxième élément (52) étant concourant avec les axes de rotation (X5, X6) ou (X5', X6').

12. Structure suivant la revendication précédente, dans laquelle le premier axe (X) est concourant ou sécant avec le second axe (Z) et dans laquelle le point de concours des premier et deuxième axes (X) et (Z) est situé à égale distance des points de concours d'une part des axes de rotation (X5, X6) du segment de liaison (24") par rapport au segment (20) et du segment (20) par rapport à l'avant-bras (6), et d'autre part des axes de rotation (X5', X6') du segment (52) par rapport au segment (22) et du segment (22) par rapport à l'avant-bras (6'), et la position de référence pour la saisie et la manipulation de la poignée (16) est placée à l'intersection du premier axe de rotation (X) et du deuxième axe de rotation (Z).

13. Structure selon l'une des revendications précédentes, dans laquelle la poignée (16) est articulée sur le porte-poignée (18) au niveau d'une de ses extrémités.

14. Structure selon l'une des revendications précédentes, dans laquelle les moyens de démultiplication sont formés par un cabestan à câble.

15. Structure selon l'une des revendications précédentes, dans laquelle les moyens de démultiplication sont formés par des engrenages ou des galets frottants.

16. Structure selon la revendication 14 ou 15, dans lequel les moyens de démultiplication comportent au moins une première poulie ou un premier engrenage ou galet (28) fixée sur l'un des segments (20, 22) et montée apte à pivoter sur le segment de liaison (24), son axe étant confondu avec l'axe de
l'articulation du segment de liaison (24) sur ledit segment (20, 22) et une deuxième poulie ou un deuxième engrenage ou galet (32) fixée sur le porte-poignée (18) et montée apte à pivoter sur le segment de liaison (24), son axe étant confondu avec le premier axe de rotation (X), le rapport de diamètre entre les deux poulies ou entre les deux engrenages ou galets (28, 32) et leur sens d'entrainement, au moyen d'un câble enroulé autour des dites poulies ou des dents des dits engrenages ou des surfaces en contact des dits galets, fixant le rapport de démultiplication desdits moyens de démultiplication.

17. Structure selon l'une quelconque des revendications précédentes, dans laquelle le rapport de démultiplication est compris entre 1 et 2.

18. Structure selon l'une des revendications 1 à 17, dans laquelle un moteur (M4) est monté dans le porte-poignée (18) apte à entrainer la poignée (16) autour du deuxième axe (Z) et comportant deux moteurs (M1, M1') portés par la base (2) pour agir sur les épaules (3, 3') autour de quatrièmes axes (X1, X1'), deux moteurs (M2, M2') portés par les épaules (3, 3') pour agir sur les bras (4, 4') autour de cinquièmes axes de rotation (X2, X2'), et deux moteurs (M3, M3') portés par les épaules (3, 3') pour agir sur les avant-bras (6, 6') autour des sixièmes axes (X3, X3') par l'intermédiaire de bielles d'actionnement (14, 14') parallèles aux bras (4, 4').

19. Structure selon la revendication 18, dans laquelle le ou les moteurs comporte (nt) chacun un volant d'inertie à l'extrémité de leur arbre.

20. Interface haptique comportant au moins une structure selon l'une des revendications 1 à 19.

## Patentansprüche

1. Struktur mit 6 Freiheitsgraden für Roboter oder haptische Schnittstelle, eine Basis (2), zwei parallele Zweige (B, B') und ein Handgelenk (P) umfassend, wobei die genannten Zweige (B, B') mit einem Ende an der Basis (2) und mit dem anderen Ende an dem Handgelenk (P) angelenkt sind, jeder der genannten Zweige (B, B') auf der Seite der Basis (2) eine Schulter (3, 3') und auf der Seite des Handgelenks (P) einen Arm (4, 4') und einen Vorderarm (6, 6') umfasst, wobei der Vorderarm (6, 6') an dem Arm (4, 4') angelenkt ist, das genannte Handgelenk (P) dabei ein drehgelenkig an dem genannten Zweigen (B, B') angelenktes Verbindungssegment (24), an dem ein um eine erste Rotationsachse (X) drehbarer Griffträger (18) angelenkt ist, einen an dem Griffträger (18) angelenkten, um eine zweite Rotationsachse (Z) drehbaren Griff (16) umfasst, wobei der genannte Griff (16) fähig ist, sich um die erste Achse (X), die zweite Achse (Z) und eine dritte Achse (Y) herum zu drehen, und die genannte Struktur dabei auch Untersetzungseinrichtungen der Rotation des genannten Griffträgers (18) um wenigstens die erste Rotationsachse (X) in Bezug auf die Rotation des Verbindungssegments (24) umfasst.

2. Struktur nach Anspruch 1, bei der das Handgelenk (P) auch zwei das Verbindungssegment (24) mit den Vorderarmen (6, 6') verbindende Segmente (20, 22) umfasst, wobei das um zwei Achsen (X6, X6') drehbare Verbindungssegment (24) an dem ersten und dem zweiten Segment (20, 22) angelenkt ist, wobei eine der beiden Achsen (X6, X6') parallel zu der ersten Achse (X) ist, die genannten Segmente (20, 22) drehbar um zwei Achsen (X5, X5') an dem jeweiligen Vorderarm (6, 6) angelenkt sind und die genannten Segmente (20, 22) eine gekrümmte, im Wesentlichen auf die zweite Achse (Z) zentrierte Form haben.

3. Struktur nach Anspruch 1, die am Ende der Vorderarme (6, 6') Haltesegmente (7, 7') umfasst und bei der das Handgelenk (P) ebenfalls zwei Segmente (20, 22) umfasst, drehbar um zwei Rotationsachsen (X5, X5') an den Haltesegmenten (7, 7') angelenkt, wobei das Verbindungssegment (24) an dem ersten und dem zweiten Segment (20, 22) angelenkt ist, drehbar um die beiden zur ersten Achse (X) parallelen Achsen (X6, X6'), die genannten Segmente (20, 22) eine gekrümmte, im Wesentlichen auf die zweite Achse (Z) zentrierte Form haben, die Struktur ebenfalls Einrichtungen zur Aufrechterhaltung der Ausrichtung von jeder der Rotationsachsen (X5, X5') der Segmente (20, 22) in Bezug auf die Haltesegmente (7, 7') umfasst, so dass die Winkel zwischen gegebenen Achsen (X1, X1') und jeder der genannten Rotationsachsen der Segmente (20, 22) in Bezug auf die Haltesegmente (7, 7') konstant bleiben.

4. Struktur nach Anspruch 3, bei der die Rotationsachsen (X5, X5') der Segmente (20, 22) in Bezug auf die Haltesegmente (7, 7') parallel gehalten werden zu den gegebenen Achsen (X1, X1'), und bei der die gegebenen Achsen (X1, X1') parallel zueinander sind.

5. Struktur nach Anspruch 3 oder 4, bei dem die genannten Einrichtungen zur Aufrechterhaltung der Ausrichtung eine Haltestange (15a, 15a') pro Arm (4, 4') und eine Haltestange (15b, 15b') pro Vorderarm (6, 6') umfassen, von denen jede mit dem Arm (4, 4') oder dem Vorderarm (6, 6') ein deformierbares Parallelogramm bildet.

6. Struktur nach einem der Ansprüche 3 bis 5, bei dem die erste Achse (X) in der Ebene enthalten ist, welche die Rotationsachsen (X6, X6') des Verbindungssegments (24) in Bezug auf die Segmente (20, 22) enthalten und in der diese erste Achse (X) äquidistant ist zu den Rotationsachsen (X6, X6') des Verbindungssegments (24) in Bezug auf die Segmente (20, 22).

7. Struktur nach einem der Ansprüche 3 bis 5, bei dem die zweite Achse (Z) in der Ebene enthalten ist, welche die Rotationsachsen (X5, X5') der Segmente (20, 22) in Bezug auf die Haltesegmente (7, 7') enthalten und in der diese erste Achse (X) äquidistant ist zu den Rotationsachsen (X5, X5') der Segmente (20, 22) in Bezug auf die Haltesegmente (7, 7').

8. Struktur nach einem der vorhergehenden Ansprüche, bei der wenigstens zwei der Achsen (X), (Y) und (Z) rechtwinklig sind, bei der die erste Achse (X) und die zweite Achse (Z) konvergieren oder sich schneiden, und bei der die Greif- und Handhabungs-Bezugsposition des Griffs sich im Schnittpunkt der Rotationsachse (X) des Griffträgers (18) und der Rotationsachse (Z) des Griffs (16) befindet.

9. Struktur nach einem der Ansprüche 3 bis 5, bei der die erste Achse (X) in der Ebene liegt, welche die Rotationsachsen (X6, X6') des Verbindungssegments (24) in Bezug auf die Segmente (20, 22) enthält und äquidistant ist zu diesen Achsen (X6, X6'), dabei ist die erste Achse (X) ebenfalls äquidistant zu den Rotationsachsen (X5, X5') der Segmente (20, 22) in Bezug auf die Haltesegmente (7, 7'), schneidet sich oder konvergiert mit der zweiten Achse (Z), liegt die zweite Achse (Z) in der Ebene, welche die Rotationsachsen (X5, X5') der Segmente (20, 22) in Bezug auf die Haltesegmente (7, 7') enthält, bei der die Greif- und Handhabungs-Bezugsposition des Griffs sich im Schnittpunkt der ersten Rotationsachse (X) des Griffträgers (18) und der zweiten Rotationsachse des Griffs (16) befindet, und bei der die Rotationsachsen (X5, X5') der Segmente (20, 22) in Bezug auf die Haltesegmente (7, 7') und die Rotationsachsen (X6, X6') der Verbindungssegmente (24) in Bezug auf die Segmente (20, 22) konvergierend und rechtwinklig sind.

10. Struktur nach einem der Ansprüche 1 oder 2, bei der das Verbindungssegment (24', 24", 24"') zwei Teile umfasst, gelenkig miteinander verbunden durch eine Gelenkzapfenverbindung, wobei jeder bzw. jedesTeil an einem Segment (20, 22) angelenkt ist.

11. Struktur nach Anspruch 10, bei der das Verbindungssegment (24", 24"') umfasst : ein erstes Element (50), mit im Wesentlichen der Form eines L, von dem ein Schenkel an einem der Segmente (20, 22) angelenkt ist, drehbar um eine der Rotationsachsen (X6, X6') des Verbindungssegments (24", 24"') in Bezug auf die Segmente (20, 22), konvergierend mit einer der Rotationsachsen (X5, X5') der Segmente (20, 22) in Bezug auf die Vorderarme (6, 6'), und der andere Schenkel im Wesentlichen parallel ist zu dem Griffträger (18), und ein zweites Element (52) von gekrümmter Form, wobei das genannte zweite Element (52) an dem ersten Element (50) in Höhe eines ersten Endes (52.1) drehbar angelenkt ist, das genannte zweite Element (52) an dem anderen Segment (22, 20) angelenkt ist, drehbar um eine Achse, die mit der anderen der Rotationsachsen (X5', X5) der Segmente (22, 20) in Bezug auf die Vorderarme (6', 6) konvergiert, wobei die Rotationsachsen (X5, X5') der Segmente (20, 22) in Bezug auf die Vorderarme (6, 6') und die Rotationsachsen (X6, X6') des ersten Elements (50) und des zweiten Elements (52) des Verbindungssegments (24", 24"') in Bezug auf die Segmente (20, 22) konvergieren und die Gelenkachse zwischen dem ersten Element (50) und dem zweiten Element (52) mit den Rotationsachsen (X5, X6) oder (X5', X6') konvergiert.

12. Struktur nach dem vorhergehenden Anspruch, bei der die erste Achse (X) und die zweite Achse (Z) konvergieren oder sich schneiden, und bei der der Konvergenzpunkt der ersten (X) und der zweiten (Z) Achse äquidistant ist zu den Konvergenzpunkten von einerseits den Rotationsachsen (X5, X6) des Verbindungssegments (24") in Bezug auf das Segment (20) und des Segments (20) in Bezug auf den Vorderarm (6), und andererseits den Rotationsachsen (X5', X6') des Segments (52) in Bezug auf das Segment (22) und des Segments (22) in Bezug auf den Vorderarm (6'), und die Greif- und Handhabungs-Bezugsposition des Griffs (16) sich im Schnittpunkt der ersten Rotationsachse (X) und der zweiten Rotationsachse (Z) befindet.

13. Struktur nach einem der vorhergehenden Ansprüche, bei der der Griff (16) mit einem seiner Enden an dem Griffträger (18) angelenkt ist.

14. Struktur nach einem der vorhergehenden Ansprüche, bei der die Übersetzungseinrichtungen durch eine Kabelwinde gebildet werden.

15. Struktur nach einem der vorhergehenden Ansprüche, bei der die Übersetzungseinrichtungen durch Zahnräder oder Reibrollen gebildet werden.

16. Struktur nach Anspruch 14 oder 15, bei der die Übersetzungseinrichtungen umfassen : mindestens eine erste Scheibe oder ein erstes Zahnrad oder Rolle (28), befestigt an einem der Segmente (20, 22) und so montiert, dass es sich auf dem Verbindungssegment (24) drehen kann, wobei seine Achse zusammenfällt mit der Gelenkachse des Verbindungssegments (24) in Bezug auf das genannte Segment (20, 22), und eine zweite Scheibe oder ein zweites Zahnrad oder Rolle (28), befestigt an dem Griffhalter (18) und so montiert, dass es sich auf dem Verbindungssegment (24) drehen kann und seine Achse dabei zusammenfällt mit der ersten Rotationsachse (X), wobei das Durchmesserverhältnis zwischen den beiden Scheiben oder zwischen den beiden Zahnrädern oder Rollen (28, 32) und ihrer Antriebsrichtung - mit Hilfe eines um die genannten Scheiben gewickelten Kabels oder der Zähne der genannten Zahnräder oder der Kontaktflächen der genannten Rollen - das Übersetzungsverhältnis der genannten Übersetzungseinrichtungen festlegt.

17. Strukturen nach einem der vorhergehenden Ansprüche, bei der das Übersetzungsverhältnis zwischen 1 und 2 enthalten ist.

18. Struktur nach einem der Ansprüche 1 bis 17, bei der ein den Griff (16) um die zweite Achse (Z) herum antreibender Motor (M4) in den Griffträger (18) montiert ist und die umfasst : die zwei durch die Basis (2) getragene Motoren (M1, M1'), die mit den Schultern (3, 3') interagieren, um vierte Achsen (X1, X1') herum, zwei durch die Schultern (3, 3') getragene Motoren, die mit den Armen (4, 4') interagieren, um fünfte Rotationsachsen (X2, X2') herum, und zwei durch die Schultern (3, 3') getragene Motoren (M3, M3'), die mittels Betätigungsstangen (14, 14'), parallel zu den Armen (4, 4'), mit den Vorderarmen (6, 6') um sechste Achsen (X3, X3') herum interagieren.

19. Struktur nach Anspruch 18, bei welcher der (die) Motor(en jeweils) ein Schwungrad am Wellenende umfasst (umfassen).

20. Haptische Schnittstelle mit wenigstens einer Struktur nach einem der Ansprüche 1 bis 19.

## Claims

1. Structure with six degrees of freedom for a robot or haptic interface comprising a base (2), two branches in parallel (B, B') and a wrist joint (P), said branches (B, B') being installed articulated at one end on the base (2) and at the other end on the wrist joint (P), said branches (B, B') each comprising a shoulder (3, 3') at the base (2), an arm (4, 4') and a forearm (6, 6') at the wrist joint (P), the forearm (6, 6') being articulated onto the arm (4, 4'), said wrist joint (P) comprising a connecting segment (24) articulated in rotation on said branches (B, B'), onto which a handle holder (18) is articulated about a first rotation axis (X), a handle (16) articulated in rotation on the handle holder (18) about a second rotation axis (Z), said handle (16) being capable of being moved in rotation about the first axis (X), the second axis (Z) and a third axis (Y), said structure also comprising means of gearing down the rotation of said handle holder (18) about at least the first rotation axis (X) relative to rotation of the connecting segment (24).

2. Structure according to claim 1, in which the wrist joint (P) also comprises two segments (20, 22) connecting the connecting segment (24) to the forearms (6, 6'), the connecting segment (24) being articulated in rotation on the first and second segments (20, 22) about two axes (X6, X6'), one of said two axes (X6, X6') being parallel to the first axis (X), said segments (20, 22) each being articulated in rotation on the forearms (6, 6') about the two axes (X5, X5'), said segments (20, 22) having a curved shape centred approximately on the second axis (Z).

3. Structure according to claim 1, comprising holding segments (7, 7') at the end of the forearms (6, 6') and in which the wrist joint (P) also comprises two segments (20, 22) articulated in rotation on the holding segments (7, 7') about the two rotation axes (X5, X5'), the connecting segment (24) being articulated in rotation on the first and the second segments (20, 22) about two axes (X6, X6') parallel to the first axis (X), said segments (20, 22) having a curved shape centred approximately on the second axis (Z), the structure also comprising means of holding the orientation of each rotation axis (X5, X5') of the segments (20, 22) on the holding segments (7, 7'), such that the angles between given axes (X1, X1') and each of said rotation axes (X5, X5') of segments (20, 22) on the holding segments (7, 7') remain constant.

4. Structure according to claim 3, in which the rotation axes (X5, X5') of the segments (20, 22) on the holding segments (7,7') are advantageously each held parallel to said given axes (X1, X1') and in which the given axes (X1, X1') are parallel to each other.

5. Structure according to claim 3 or 4, in which said means of holding the orientation comprise a holding connecting rod (15a, 15a') for each arm (4, 4') and a holding connecting rod (15b, 15b') for each forearm (6, 6'), each forming a deformable parallelogram with the arm (4, 4') or forearm (6, 6').

6. Structure according to any one of claims 3 to 5, in which the first axis (X) is in the plane containing the rotation axes (X6, X6') of the connecting segment (24) on the segments (20, 22) and in which this first axis (X) is at an equal distance from the rotation axes (X6, X6') of the connecting segment (24) on the segments (20, 22).

7. Structure according to any one of claims 3 to 5, in which the second axis (Z) is in the plane containing the rotation axes (X5, X5') of the segments (20, 22) on the holding segments (7, 7').and in which the first axis (X) is at an equal distance from the rotation axes (X5, X5') of the segments (20, 22) on the holding segments (7, 7').

8. Structure according to any one of the previous claims, in which at least two of axis's (X), (Y) and (Z) are orthogonal in which the first axis (X) is concurrent with or intersects the second axis (Z) and in which the reference gripping and manipulation position of the handle is located at the intersection of the first rotation axis (X) of the handle holder (18) and the second rotation axis (Z) of the handle (16).

9. Structure according to any one of claims 3 to 5, in which the first axis (X) is in the plane containing the rotation axes (X6, X6') of the connecting segment (24) on the segments (20, 22) and at an equal distance from these axes (X6, X6'), the first axis (X) is also at equal distance from the rotation axes (X5, X5') of the segments (20, 22) on the holding segments (7, 7'), the first axis (X) is concurrent with or intersects the second axis (Z), the second axis (Z) is in the plane containing the rotation axes (X5, X5') of the segments (20, 22) on the holding segments (7, 7'), and in which the reference gripping and manipulation position of the handle is at the intersection of the first rotation axis (X) of the handle holder (18) and the second rotation axis (Z) of the handle (16) and in which the rotation axes (X5, X5') of the segments (20, 22) on the holding segments (7, 7') and the rotation axes (X6, X6') of the connecting segment (24) on the segments (20, 22) are concurrent and orthogonal.

10. Structure according to claim 1 or 2, in which the connecting segment (24', 24", 24"') is divided into two parts articulated to each other through a pivot connection, each part being articulated on a segment (20, 22).

11. Structure according to claim 10, in which the connecting segment (24", 24"') comprises a first approximately L-shaped element (50), one branch of which is articulated to one of the segments (20, 22) about one of the rotation axes (X6, X6') of the connecting segment (24", 24"') on the segments (20, 22) concurrent with one of the rotation axes (X5, X5') of the segments (20, 22) on the forearms (6, 6') and the other branch is approximately parallel to the handle holder (18), and a second elbow-shaped element (52), said second element (52) being articulated in rotation on the first element (50) at a first end (52.1), said second element (52) being articulated in rotation on the other segment (22, 20) about an axis concurrent with the other rotation axis (X5', X5) of the segments (22, 20) on the forearms (6', 6), the rotation axes (X5, X5') of the segments (20, 22) on the forearms (6, 6') and the rotation axes (X6, X6') of the first element (50) and of the second element (52) of the connecting segment (24", 24"') on the segments (20, 22) being concurrent, and the articulation axis between the first element (50) and the second element (52) being concurrent with the rotation axes (X5, X6) or (X5', X6').

12. Structure according to the previous claim, in which the first axis (X) is concurrent with or intersects the second axis (Z) and in which the concurrent point of the first and second axes (X) and (Z) is located at equal distance from the concurrent points of firstly the rotation axes (X5, X6) of the connecting segment (24") relative to the segment (20) and of the segment (20) relative to the forearm (6), and secondly the rotation axes (X5', X6') of the segment (52) relative to the segment (22) and of the segment (22) relative to the forearm (6'), and the reference position for gripping and manipulation of the handle (16) is located at the intersection of the first rotation axis (X) and the second rotation axis (Z).

13. Structure according to one of the previous claims, in which the handle (16) is articulated on the handle holder (18) at one of its ends.

14. Structure according to one of previous claims, in which the gearing down means are composed of a capstan and cable.

15. Structure according to one of previous claims, in which the gearing down means are formed by gear wheels or friction rollers.

16. Structure according to claim 14 or 15, in which the gearing down means comprise at least one first pulley or at least one first gear wheel or at least one first friction roller (28) fixed onto one of the segments (20, 22) and installed free to pivot on the connecting segment (24), its axis being coincident with the articulation axis of the connecting segment (24) on said segment (20, 22) and a second pulley or least one second gear wheel or at least one second friction roller (32) fixed onto the handle holder (18) and installed free to pivot on the connecting segment (24), its axis being coincident with the first rotation axis (X), the ratio of the diameters between the two pulleys or between the two gear wheels or between the two friction rollers (28, 32) and their driving direction, by means of a cable wound around said pulleys or the teeth of said gears or the contact surfaces of said rollers, fixing the gearing down ratio of said gearing down means.

17. Structure according to any one of the previous claims, in which the gearing down ratio is between 1 and 2.

18. Structure according to one of claims 1 to 17, in which a motor (M4) is installed in the handle holder (18) capable of driving the handle (16) about the second axis (Z) and comprising two motors (M1, M1') supported by the base (2) to act on the shoulders (3, 3') about fourth axes (X1, X1'), two motors (M2, M2') supported by the shoulders (3, 3') to act on the arms (4, 4') about fifth rotation axes (X2, X2'), and two motors (M3, M3') supported by the shoulders (3, 3') to act on the forearms (6, 6') about sixth axes (X3, X3') through actuation connecting rods (14, 14') parallel to the arms (4, 4').

19. Structure according to claim 18, in which each of the motor(s) comprises an inertial flywheel at the end of its shaft.

20. Haptic interface comprising at least one structure according to one of claims 1 to 19.
